(19) Europäisches Patentamt
European Patent Office
Office européen des brevets

(11) Publication number: 0 032 308
A2

(12) EUROPEAN PATENT APPLICATION

(21) Application number: 80304677.0

(22) Date of filing: 22.12.80

(51) Int. Cl.³: C 08 F 10/00
C 08 F 4/64, C 08 F 4/02

(30) Priority: 10.01.80 GB 8000883
06.06.80 GB 8018580
11.12.80 GB 8039758

(43) Date of publication of application:
22.07.81 Bulletin 81/29

(84) Designated Contracting States:
AT BE CH DE FR GB IT LI NL SE

(71) Applicant: IMPERIAL CHEMICAL INDUSTRIES LIMITED
Imperial Chemical House Millbank
London SW1P 3JF(GB)

(72) Inventor: Caunt, Anthony David
1 Templewood Welwyn Garden City
Hertfordshire(GB)

(72) Inventor: Gavens, Paul David
2D Fakeswell Lane Lower Stondon
Bedfordshire(GB)

(72) Inventor: McMeeking, John
55 Nursery Gardens Lodgefield
Welwyn Garden City Herfordshire(GB)

(74) Representative: James, David Gomer et al,
Imperial Chemical Industries Limited Legal Department: Patents Thames House North Millbank
London SW1P 4QG(GB)

(54) **Ethylene polymerisation process.**

(57) Ethylene is polymerised, or copolymerised with another olefin monomer, using a catalyst system comprising an organic metal compound and a titanium-containing material which is obtained by reacting together an inert particulate material, an organic magnesium compound, a halogen-containing compound such as carbon tetrachloride, silicon tetrachloride, trichlorosilane, phosphorus trichloride or boron trichloride, and titanium tetrachloride. The process can be used to effect copolymerisation of ethylene with an alpha-olefin monomer such as butene-1 in a fluidised bed reactor.

A $CH_2=CHR^1$

B $R^2_a MgX_{(2-a)}$

C $R^2_a MgX_{(2-a)} bR^2_c AlX_{(3-c)}$

D $R^2_a MgX_{(2-a)} + bR^2_c AlX_{(3-c)}$

E $R^3_d SiZ_{(4-d)}$

F $R^4 COZ$

G $R^5 Z_e$

EP 0 032 308 A2

# ETHYLENE POLYMERISATION PROCESS

The present invention relates to a process for the production of a polymer or copolymer of ethylene.

According to the present invention there is provided a process for the production of an ethylene polymer which process comprises contacting ethylene, or a mixture of ethylene and a monomer which is copolymerisable with ethylene, under polymerisation conditions with a catalyst system obtained by mixing together 1) an organic compound of a metal of Group IIA of the Periodic Table or of aluminium, or a complex of an organic compound of a metal of Group IA or Group IIA of the Periodic Table with an organic compound of aluminium; and 2) the reaction product obtained by reacting together reagents consisting of a component I which is at least one substantially inert solid particulate material having reactive sites (as hereinafter defined), a component II which is an organic magnesium compound or a complex or mixture of an organic magnesium compound and an aluminium compound, a component III which is at least one halogen-containing compound selected from hydrogen halides, boron halides, halogens, inter-halogen compounds and halides of elements of Groups IVB, VB and VIB of the Periodic Table, and a component IV which is titanium tetrachloride.

For convenience, the substantially inert solid particulate material having reactive sites will be referred to hereafter as the solid particulate material.

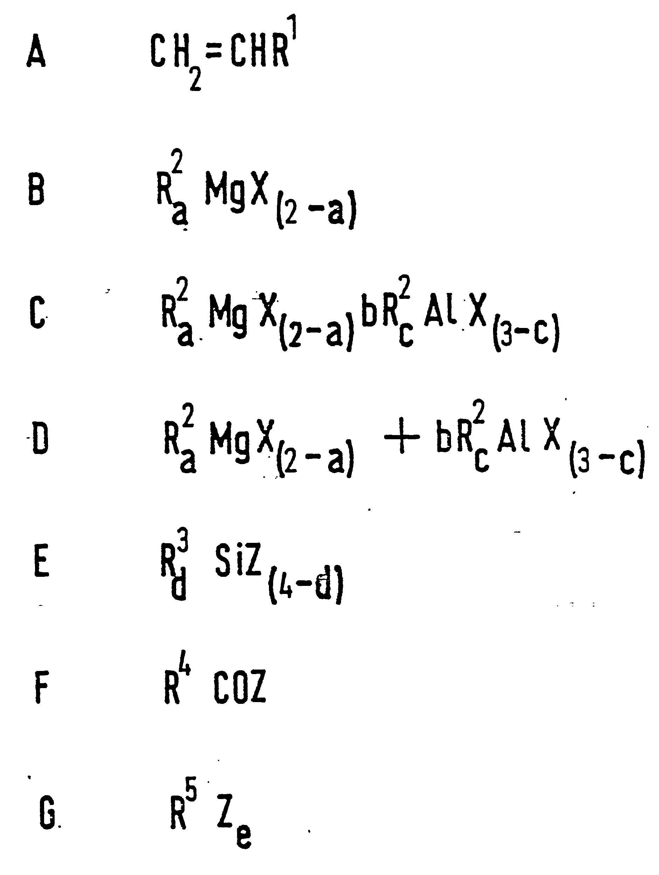

The formulae A to G in the attached drawing represent compounds which may be used in the present invention.

All references herein to the Periodic Table are to the Short Periodic Table as set out inside the back cover of "General and Inorganic Chemistry" by J R Partington, Second Edition, published by MacMillan and Company Limited, London in 1954.

The process of the present invention is preferably used to effect the copolymerisation of ethylene with another monomer. The other monomer is preferably an alpha-olefin monomer of the formula A in which,

$R^1$ is an alkyl radical.

In the formula A, it is preferred that the group $R^1$ contains not more than 10 carbon atoms and conveniently contains up to 4 carbon atoms. Thus, the monomer of formula A may be propylene, butene-1, pentene-1 or hexene-1 or 4-methylpentene-1 or any other monomer which satisfies formula A.

If the process of the present invention is used for the copolymerisation of ethylene, the quantity of the comonomer which is copolymerised with the ethylene is conveniently in an amount such that the polymer formed has a density in the range of 915 up to 940 kg/m$^3$. The molar ratio of ethylene to the comonomer during the polymerisation is typically in the range from 15:1 to 1:1, but it will be appreciated that the optimum ratio will be dependent on the particular comonomer being used.

The polymerisation process can be effected under any conditions of temperature and pressure which have previously been used for the polymerisation and copolymerisation of ethylene. Thus, the temperature may be in the range from 20°C up to 300°C and the pressure may be from below 1 kg/cm$^2$ up to 3000 kg/cm$^2$. However, it is preferred that the polymerisation is carried out under relatively moderate conditions of temperature and pressure. Thus, it is preferred that the temperature is in the range from 50°C up to 100°C and that the pressure is from 2 kg/cm$^2$ up to 50 kg/cm$^2$. Especially preferred polymerisation conditions are at a temperature in the range from 70 up to 95°C and at a pressure of from 5 kg/cm$^2$ up to 30 kg/cm$^2$.

Component 1) of the catalyst may be an organic magnesium compound of the same type as is used as

component 2) in the production of the titanium-containing material. If the magnesium compound is a Grignard reagent it is preferred that it is substantially ether-free. Alternatively, component 1) may be a complex of a metal of Group IA of the Periodic Table with an organic aluminium compound such as a compound of the type lithium aluminium tetraalkyl. Useful materials for use as component 1) of the catalyst are organic aluminium compounds such as aluminium hydrocarbyl halides, aluminium hydrocarbyl sulphates, aluminium hydrocarbyl hydrocarbyloxy compounds and in particular, aluminium trihydrocarbyls or dihydrocarbyl aluminium hydrides. The aluminium trihydrocarbyl is preferably an aluminium trialkyl in particular one in which the alkyl group contains from 2 up to 10 carbon atoms, for example aluminium triethyl, aluminium tributyl, or aluminium trioctyl.

Component 2) of the catalyst system is a transition metal composition. This is obtained by reacting together four different components. The reaction product may be obtained by mixing these four components together in a single stage but it is preferred to produce the reaction product by reacting the various components in more than one stage. It is particularly preferred to contact the at least one solid particulate material which is component I with one of components II, III or IV, and then treat in turn with the other two components. The treatments with components II, III and IV may be effected by adding each component, in turn, to the reaction mixture from the previous stage, and this procedure may be effected without separating the reaction product from the reaction mixture of one stage before adding a further component to effect the next stage. However, a solid reaction product may be separated from the reaction mixture at the end of any, or all, of the treatment stages and the separated solid reaction product is then preferably washed. If an excess

of any of components II, III or IV is used, it is very desirable to separate and wash the solid reaction product at the end of any stage in which such an excess is used. It is preferred, but not essential, to separate and wash the solid reaction product on completion of the first treatment stage and also on completion of the treatment stage in which the halogen-containing compound is used. It is generally preferred that the treatment with titanium tetrachloride is effected as the last stage and in this preferred process the at least one solid particulate material is treated first with component II or component III, the reaction product is treated with whichever ~~of component II or~~ component III was not used in the first stage and then finally with the titanium tetrachloride. It may, however, be desired to effect an intermediate treatment with titanium tetrachloride in addition to a final titanium tetrachloride treatment. Any intermediate treatment with titanium tetrachloride is conveniently effected after the first treatment stage in which component I is reacted with component II or component III and before the subsequent stage in which the solid reaction product is treated with the other one of component II or component III.

Component I which is used in the production of catalyst component 2) is at least one substantially inert solid particulate material having reactive sites (as hereinafter defined). By "reactive sites" are meant those sites which are capable of abstracting a magnesium hydrocarbyl compound from a solution thereof. The number of reactive sites can be determined by adding, to a known weight of the at least one solid particulate material, a solution containing an excess quantity of a magnesium hydrocarbyl compound, stirring the mixture at ambient temperature for an hour and analysing the supernatant liquid to determine the quantity of the magnesium

hydrocarbyl compound which remains in the solution, from which can be calculated the number of moles of magnesium hydrocarbyl compound which have been abstracted from the solution for each gramme of the solid particulate material, this being equivalent to the proportion, in moles, of the reactive sites.

The solid particulate material which is used as component I in producing the transition metal composition which is component 2) of the catalyst system, may be any such material which has been proposed previously for use in an olefin polymerisation catalyst system. Thus, the solid particulate material may be an organic or inorganic compound of a metal, which term is used herein to include silicon, such as a metal halide, or a metal oxide or mixtures or reaction products of two or more such metal compounds.

It is particularly preferred that the solid particulate material which is component I is a metal oxide, and in particular is an oxide of a metal of Groups I to IV of the Periodic Table. Solid oxides which may be used as component I include those with a substantially inert matrix material wherein at least some of the reactive sites are present in a hydroxylic surface (as hereinafter defined) which is free from adsorbed water. By "hydroxylic surface" is meant a surface having a plurality of -OH groups attached to the surface, the hydrogen atom of the -OH group being capable of acting as a proton source, that is, having an acidic function. A matrix material having a hydroxylic surface is substantially inert in that the bulk of the matrix material is chemically inert.

The at least one solid particulate material may be silica, alumina, magnesia, mixtures of two or more thereof, for example magnesium trisilicate which may be represented as $(MgO)_2(SiO_2)_3xH_2O$ (x is a positive

number), thereon and containing minor amounts, for example less than 10% by weight, of other suitable solid particulate materials such as zinc oxide. Particularly useful solid particulate materials include alumina and silica.

The at least one solid particulate material preferably has a surface area of at least 30 $m^2/g$, particularly at least 100 $m^2/g$, and especially at least 200 $m^2/g$. Useful forms of the at least one solid particulate material may be obtained by heating an inorganic oxide or hydroxide in an inert atmosphere, and/or at a reduced pressure, to a temperature of at least 200°C and not more than 1200°C and preferably in the range 300°C to 1000°C. A suitable inert atmosphere for heating is nitrogen and a suitable reduced pressure is less than 10 mm of mercury. The temperature used will be dependent on the material being heated. Thus, if silica is being heated, it is especially preferred to use a temperature in the range 320°C up to 400°C, for example 350°C. Using hydrated alumina, for example Boehmite (which may be regarded as hydrated gamma-alumina), or aluminium hydroxide, it is especially preferred to use a temperature in the range 400°C up to 1000°C, for example 500°C. Alternatively, the at least one solid particulate material may be heated in a high boiling point inert hydrocarbon, or halohydrocarbon, liquid, for example under azeotropic conditions. Heating in the presence of an inert liquid medium is typically effected at a temperature in the range 100°C up to 200°C using a liquid having a boiling point in this range.

Component II of the reaction mixture which is used to produce the transition metal component of the catalyst is an organic magnesium compound or complex or mixture thereof with an aluminium compound. The organic magnesium compound is a compound of formula B in the attached

formula drawings, the complex thereof with an aluminium compound is represented by formula C in the attached formula drawings and the mixture thereof with an aluminium compound is represented by the formula D in the attached formula drawings.

In the formulae B, C and D,

each $R^2$, which may be the same or different, is a hydrocarbon radical;

each X, which may be the same or different, is an oxyhydrocarbon radical or a halogen atom other than fluorine;

a has a value of greater than 0 up to 2;

b has a value of greater than 0 up to 2; and

c has a value of from 0 up to 3.

The groups $R^2$ are all typically alkyl groups and conveniently are alkyl groups containing from 1 up to 20 carbon atoms and especially 1 up to 6 carbon atoms. The groups X are all preferably halogen atoms, other than fluorine, for example chlorine or bromine atoms. The value of a is preferably at least 0.5 and it is particularly preferred that the value of a is 2. The value of b is typically in the range 0.05 up to 1.0. The value of c is typically at least 1 and is preferably 3.

The organic magnesium compound of formula B, which is also present in the materials of formulae C and D, may be a Grignard reagent such as ethyl magnesium chloride or butyl magnesium bromide or may be a compound such as ethyl magnesium ethoxide, but is preferably a magnesium dihydrocarbyl compound such as diethyl magnesium or dibutyl magnesium. Whilst the aluminium compound, which is present in the materials of formulae C and D, may be aluminium chloride or aluminium bromide, it is preferably an organic aluminium compound such as ethyl aluminium dichloride, diethyl aluminium monochloride or diethyl aluminium ethoxide, and is particularly a compound such as aluminium triethyl or aluminium tributyl.

It will be appreciated that the materials of formulae C and D may be present together as an equilibrium mixture and indeed such a mixture may be obtained merely by mixing together the organic magnesium compound with the aluminium compound when the resultant product may be a mixture of the organic magnesium compound, the aluminium compound and the complex of formula D. It will be appreciated that it is preferred that the compound of formula B, C or D is a material which is soluble in inert liquid hydrocarbons.

The organic magnesium compound, or the complex or mixture thereof with the aluminium compound, is conveniently added as a liquid medium to a solid material which is either the at least one solid particulate material or the product of reacting the at least one solid particulate material with one or both of components III and IV. The solid material to which component II is added, may be suspended in an inert liquid such as an aliphatic hydrocarbon. The liquid medium containing component II is conveniently a solution of the organic magnesium compound, or the mixture or complex thereof with the aluminium compound, in an inert liquid such as a hydrocarbon liquid, for example hexane, heptane, octane, decane, dodecane or mixtures of the isomers thereof, or inert halohydrocarbons such as chlorobenzene.

The quantity of the compound B, C or D which is added to the at least one solid particulate material, or the product of reacting the at least one solid particulate material with one or both of components III or IV, is dependent on the nature of the at least one solid particulate material, the surface area thereof and in particular any heat treatment used in obtaining the solid particulate material. The quantity of the compound B, C or D which is added may be in excess of that required to saturate the surface of the at least one solid particulate material, that is in excess of one mole for each mole of

the reactive sites present on the at least one solid particulate material. When the solid particulate material is a metal oxide, typically at least some of the reactive sites are surface hydroxyl groups.

The quantity of the compound B, C or D which is used is also dependent on the quantity of the halogen-containing compound which is component III and, in particular, it is preferred that the molar quantity of the compound B, C or D which is used is less than the amount of the halogen-containing compound which is component III and in particular is from 0.25 up to 0.8 mole of compound B, C or D for each mole of the halogen-containing compound which is component III.

The compound B, C or D can be added to the at least one solid particulate material, or the product of the at least one solid particulate material and one or both of components III and IV at any suitable temperature, for example from 0°C up to 100°C, conveniently at ambient temperature, that is from about 15°C up to about 25°C. After adding the compound B, C or D to the at least one solid particulate material, or the product of the at least one solid particulate material and at least one of components III and IV, reaction is conveniently effected by allowing the materials to remain in contact for at least 5 minutes and not more than 20 hours, for example 0.25 up to 6 hours. After the desired period of contacting, the solid material which is the reaction product may be separated from the liquid medium, for example by filtration, decantation or evaporation, and may then be washed one or more times. If desired, the solid material which is the reaction product may be subjected finally to an optional low pressure (about 1 mm of mercury) treatment at ambient temperature, or higher, for a time of up to several hours, for example 2 hours before being used in the next stage of the preparation.

However, these separation and washing operations are not essential, particularly if component II is used in an amount of less than one mole for each mole of reactive sites present in the at least one solid particulate material.

The at least one halogen-containing compound which is component III is preferably a chlorine-containing compound. If the halogen-containing compound is a halide of an element of Groups IVB, VB or VIB of the Periodic Table, it is preferred that this is an element of the second or third series. The at least one halogen-containing compound may be a hydrogen halide, a silicon halide of the formula E, a carboxylic acid halide of the formula F, a hydrocarbyl halide of the formula G, a phosphorus halide, a phosphorus oxyhalide, a boron halide, sulphuryl chloride, phosgene, nitrosyl chloride, chlorine, bromine, a chlorinated polysiloxane or an ammonium hexafluorosilicate, wherein

$R^3$ is a hydrogen atom or a hydrocarbon radical;

$R^4$ is a hydrocarbon radical;

$R^5$ is the residue obtained obtained by removing one or more hydrogen atoms from a hydrocarbon compound;

Z is a halogen atom other than fluorine;

d is 0 or an integer from 1 up to 3; and

e is an integer from 1 up to 10.

In the silicon halides of formula E, it is preferred that $R^3$ is an alkyl group containing one up to six carbon atoms or an aryl, alkaryl or aralkyl group containing 6 up to 15 carbon atoms. In the carboxylic acids of formula F, it is preferred that $R^4$ is an alkyl group containing 1 up to 4 carbon atoms or an aryl, alkaryl or aralkyl group containing 6 up to 12 carbon atoms. In the hydrocarbyl halides of formula G, the group $R^5$ may be a carbon residue or may include hydrogen atoms and Z, or each Z, is preferably attached to an aliphatic carbon atom.

The silicon halides of formula E include silicon tetrachloride, silicon tetrabromide and halosilanes such as trichlorosilane, diethyl silicon dichloride, monobutyl silicon trichloride and monoethyl silicon trichloride.

The carboxylic acid halides of formula F include acetyl chloride, benzoyl chloride and p-methylbenzoyl chloride.

The hydrocarbyl halides of formula G include carbon tetrachloride, chloroform and 1,1,1-trichloroethane.

Suitable materials for use as the halogen-containing compound are halogenating agents by which is meant a halogen-containing compound which, when reacted with the at least one solid particulate material, or the product of reacting the at least one solid particulate material with at least one of the other components, gives a solid reaction product having an increased halogen content.

The at least one halogen-containing compound is conveniently added in a liquid form to a solid material which is the at least one solid particulate material, or the solid reaction product from a previous treatment stage. This addition may be effected by using a solution of the halogen-containing compound in an inert solvent such as an aliphatic hydrocarbon solvent. Thus, the reaction with the solid material is conveniently carried out by suspending the solid material in a liquid medium which is, or which contains, the halogen-containing compound. However, the halogen-containing compound may be used in the gas phase. Using a halogen-containing compound which is gaseous at ambient temperature, for example hydrogen chloride or boron trichloride, the gas is conveniently passed into a stirred suspension containing the solid material. Alternatively, a gaseous halogen-containing compound may be passed, optionally as a mixture with an inert gaseous diluent such as nitrogen, through a bed of the solid material, conveniently a

fluidised bed. This latter technique can be used both with halogen-containing compounds which are gaseous at ambient temperature and also with halogen-containing compounds having boiling temperatures above ambient temperature.

The reaction with the at least one halogen-containing compound can be effected at ambient temperature, or at an elevated temperature which may be as high as 600°C but typically does not exceed 100°C. The preferred temperature will be dependent on the particular halogen-containing compound, for example, using silicon tetrachloride the temperature is preferably at least 60°C.

The quantity of the at least one halogen-containing compound is preferably sufficient to provide at least one halogen atom at every reactive site on the solid particulate material. It is convenient to add the halogen-containing compound in the amount of 1 mole for every mole of reactive sites on the solid particulate material. However, it should be appreciated that smaller quantities of the halogen-containing compound may be used, for example as little as 0.2 mole of the halogen-containing compound for each reactive site. Alternatively, an excess of the halogen-containing compound may be used, and this is conveniently achieved by suspending the solid material in an excess quantity of a liquid halogen-containing compound. The reaction with the at least one halogen-containing compound is conveniently effected for a time of from 0.25 up to 10 hours, preferably from 1 up to 5 hours.

After the reaction with the at least one halogen-containing compound, the reaction product is conveniently, but not necessarily, separated from the reaction medium and washed several times.

It is preferred to add the titanium tetrachloride which is component IV to a product obtained by reacting the at least one solid particulate material, either simultaneously or in succession, with component II and component III. The reaction may be effected by adding a solution of titanium tetrachloride to a solid material which is the reaction product obtained from the preceding stages. Alternatively, this solid material may be suspended in undiluted titanium tetrachloride. When undiluted titanium tetrachloride is used, the amount thereof will be such as to provide more than one mole of titanium tetrachloride for each mole of the reactive sites present on the at least one solid particulate material. If a solution of the titanium tetrachloride is used, the amount of titanium tetrachloride which is added may be less than one mole for each mole of reactive sites, and is typically in the range from 0.1 mole up to 0.8 mole of titanium tetrachloride for each mole of reactive sites. The amount of titanium tetrachloride is especially in the range 0.15 up to 0.6 mole of titanium tetrachloride for each mole of reactive sites on the solid particulate material.

The reaction of the titanium tetrachloride with the solid material is conveniently carried out at a temperature of from 0°C up to the boiling temperature of titanium tetrachloride which is about 137°C at atmospheric pressure. If the solid material is contacted with neat titanium tetrachloride this may be carried out at the boiling temperature of titanium tetrachloride. However, if the solid material is contacted with a solution of titanium tetrachloride this may conveniently be effected by stirring the mixture at ambient temperature. After adding the titanium tetrachloride to the solid material, the materials are conveniently allowed to remain in contact for from 0.25 up to 10 hours, preferably 1 up to 5

hours. After the desired period of contacting, the solid product obtained may be separated from the liquid reaction medium and washed several times with an inert liquid medium, but this separation and washing is not essential.

If the treatment with titanium tetrachloride is effected as an intermediate stage in the process, this intermediate stage is conveniently effected using an excess quantity of titanium tetrachloride. However, it is preferred that there is, in addition to an intermediate treatment with titanium tetrachloride, a final treatment as hereinbefore described. Alternatively, there may be two final treatments with titanium tetrachloride, the first being with a minor proportion (less than 1 mole of titanium tetrachloride for each mole of reactive sites), and the second being with an excess quantity of titanium tetrachloride, conveniently using undiluted liquid titanium tetrachloride.

It will be appreciated that the reaction product which is component 2) of the catalyst contains a titanium halide and a magnesium halide composition supported on a solid particulate material.

The proportions of components 1) and 2) of the catalyst system may be varied within a wide range as is well known to the skilled worker. The particular preferred proportions will be dependent on the type of materials used and the absolute concentrations of each material, but in general we prefer that for each gramme atom of titanium which is present in component 2) of the catalyst system, there is present at least one mole of component 1), and preferably at least 5 moles of component 1) for each gramme atom of titanium. The number of moles of component 1) for each gramme atom of titanium which is present in component 2) may be as high as 1000 but conveniently does not exceed 500.

When the process of the present invention is being used to effect the copolymerisation of ethylene, it is preferred to carry out the copolymerisation using a mixture of ethylene and the desired comonomer, for example butene-1 or hexene-1, wherein the mixture of monomers has essentially the same composition throughout the polymerisation process.

The process of the present invention can be used for the polymerisation or copolymerisation of ethylene to give a high yield of polymer. Since catalysts of the type used in the process of the present invention are susceptible to the presence of impurities in the polymerisation system, it is desirable to effect the polymerisation using a monomer, and a diluent if this is being used, which has a high degree of purity. Thus, it is preferred that the monomer contains less than 5 ppm by weight of water and less than 1 ppm by weight of oxygen. Materials having the desired high degree of purity can be obtained in the manner known in the art, for example by passing the material to be purified through a bed of a molecular sieve material and also through a bed of material which will remove oxygen containing impurities.

The ethylene polymerisation process is conveniently effected in the substantial absence of any liquid medium and such a process is particularly effected using a fluidised bed reactor system. In such a fluidised bed reactor system, the fluidising gas is conveniently the gas mixture to be polymerised together with any hydrogen which is present as a chain transfer agent to control molecular weight. Thus, for the copolymerisation of ethylene and butene-1 to produce an ethylene copolymer having a density of less than about 940 kg/$m^3$, the gas composition is typically from 50 to 60 mole % ethylene, 15 to 25 mole % butene-1 with the remainder, apart from inert materials and impurities, being hydrogen. However, if the monomer

being polymerised is ethylene only, the amount of hydrogen used may be greater, for example the reaction mixture may contain in excess of 50% molar of hydrogen If ethylene is being copolymerised the proportion of hydrogen may be less and typically an amount of hydrogen of up to 35% molar is sufficient. However, it will be appreciated that the amount of chain transfer agent will be dependent upon the polymerisation conditions, and especially the temperature.

The molecular weight distribution (MWD) of the polymer has been found to be dependent, to some extent, on the nature of component 2) of the catalyst system. In particular, we have found that the MWD of the polymer is influenced by the nature of the halogen-containing compound and the stage at which this is incorporated into component 2). Thus, we have found that using silicon tetrachloride as the halogen-containing compound, a polymer having a narrower MWD is obtained than when using boron trichloride as the halogen-containing compound. The use of other halogen-containing compounds such as trichlorosilane or phosphorus trichloride also may result in polymers having a broader MWD than is obtained when using silicon tetrachloride as the halogen-containing compound. These effects on MWD are most significant when component 2) of the catalyst has been prepared by reacting the at least one solid particulate material with the halogen-containing compound and thereafter reacting the product obtained, in turn, with the other components (component II and component IV).

In carrying out the process of the present invention, the catalyst components may be pre-mixed before they are introduced into the polymerisation reactor. Alternatively, the catalyst components may be added to the polymerisation reactor as separate components. Component 1) of the catalyst, which is typically an organic

aluminium compound, may be added to the reactor as a liquid either as a solution in an inert hydrocarbon diluent or, if component 1) itself is a liquid, as the neat undiluted material. Alternatively, component 1) of the catalyst may be adsorbed on a suitable support material which may be an inert organic material such as a polymer of the type being produced or a solid particulate material of the type which is used for the production of component 2) of the catalyst system.

The catalyst, or catalyst components, may be introduced into the polymerisation reactor as a suspension or solution in a suitable inert liquid medium. However, particularly if polymerisation is being carried out in the gas phase, and both of the catalyst components are used in the form of solid materials, the catalyst components may be added to the polymerisation reactor suspended in a stream of the gaseous monomer or monomer mixture.

Since the process of producing component 2) of the catalyst includes a step of treating with an organic magnesium compound, or a complex or mixture of an organic magnesium compound and an aluminium compound, component 2) of the catalyst may show some polymerising activity, particularly for ethylene, even in the absence of component 1) of the catalyst. If component 2) of the catalyst system possesses polymerisation activity, this may cause blocking of the catalyst metering or feeding devices when using a stream of a polymerisable monomer as the medium for transporting component 2) of the catalyst system. To avoid this, component 2) may be temporarily deactivated, or "pacified", by treatment with a suitable "pacifying agent". Suitable "pacifying agents" include carbon monoxide, carbon dioxide and also reagents which remove metal-carbon or metal-hydrogen bonds from the transition metal composition which is component 2) of the catalyst system. Typically the "pacifying agent" is a

protic reagent such as a carboxylic acid, an aliphatic alcohol having from one up to six carbon atoms or an anhydrous hydrogen halide. Hydrogen halides, especially hydrogen chloride, are preferred "pacifying agents". Using hydrogen chloride, this may be bubbled through a suspension of component 2) of the catalyst system in an inert diluent and any excess of the hydrogen chloride can be removed by sparging with an inert gas such as nitrogen. The "pacifying agent" is used in a manner, and in proportions, such that when the pacified component 2) is mixed with component 1) an active polymerisation catalyst system is obtained.

It will be appreciated that the particle form of the polymer obtained is dependent on, and hence is affected by, the particle form of the at least one solid particulate material which is used as component I in the production of the transition metal composition which is component 2) of the catalyst system. Hence, by the selection of a solid particulate material having an appropriate particle form, such as essentially spherical particles, a polymer of a desired particle form may be obtained.

Various aspects of the present invention will now be described with reference to the following catalyst preparations and polymerisation Examples, all stages of which were effected under an atmosphere of nitrogen unless otherwise indicated.

A) Treatment of alumina

A sample of hydrated gamma-alumina (Ketjen Grade B obtainable from Akzo Chemie of Amsterdam, Holland) was heated up to 700°C under a stream of nitrogen at atmospheric pressure, maintained at 700°C for 2 hours and then allowed to cool, in the oven, to ambient temperature.

B) Treatment of silica

The procedure of A) was repeated using silica (Davison 952 grade obtainable from W R Grace and Company of Maryland, USA).

C) Treatment of silica

The procedure of B) was repeated with the exception that a temperature of 350°C was used.

D) Treatment of alumina

The procedure of A) was repeated with the exception that a temperature of 500°C was maintained for four hours.

I Preparation of transition metal reaction product

a) Reaction with alumina and silicon tetrachloride

29.5 g of the alumina dried as described in treatment A) were suspended in 300 $cm^3$ of an isoparaffin fraction, essentially all of which had a boiling temperature in the range from 117°C up to 135°C, in a 600 $cm^3$ jacketted reaction vessel provided with a sintered glass frit and a stirrer. 3.4 $cm^3$ of silicon tetrachloride were added to the suspension, whilst stirring, over a period of two minutes. Stirring was continued and the mixture was heated to 80°C and maintained at that temperature for 15 minutes. The mixture was filtered whilst still hot, the solid was washed four times at 80°C using 300 $cm^3$ of the isoparaffin fraction for each wash and the washed solid was suspended in 300 $cm^3$ of the isoparaffin fraction at ambient temperature.

b) Treatment with magnesium dibutyl

To the mixture from Ia) were added 23.8 $cm^3$ of a 0.62 M solution of magnesium dibutyl (an equimolar mixture of primary and secondary dibutyl magnesium) in the isoparaffin fraction. This mixture was stirred for 20 minutes at ambient temperature, a further 45 minutes at 80°C and then allowed to cool to ambient temperature.

c) Treatment with titanium tetrachloride

To the reaction mixture from Ib) was added 0.55 $cm^3$ of titanium tetrachloride. The mixture was stirred at ambient temperature for 15 minutes, a further 25 minutes at 80°C and was then allowed to cool to ambient temperature. The solid reaction product present in the reaction mixture will hereafter be identified as TMC-I.

In the foregoing procedure in step Ia), 1 millimole of silicon tetrachloride was used for each gramme of alumina (which contained approximately 1 millimole of reactive sites per gramme), in step Ib), 0.5 millimole of magnesium dibutyl was used for each gramme of alumina, and in step Ic), 0.17 millimole of titanium tetrachloride was used for each gramme of alumina.

II Preparation of transition metal reaction product

a) Reaction with alumina and silicon tetrachloride

97.4 g of the alumina dried as described in treatment A) were suspended in 1000 $cm^3$ of the isoparaffin fraction in a two litre jacketted reaction vessel provided with a stirrer. 16.7 $cm^3$ of silicon tetrachloride were added to the suspension, whilst stirring, over a period of three minutes. Stirring was continued and the mixture was heated to 80°C and maintained at that temperature for two hours. Stirring was stopped, the mixture allowed to settle and the supernatant liquid was removed by decantation. The solid was washed four times at ambient temperature using 1800 $cm^3$ of the isoparaffin fraction for each wash and the washed solid was suspended in 1000 $cm^3$ of isoparaffin fraction at ambient temperature.

b) Treatment with magnesium dibutyl

To the mixture from IIa) were added 78.5 $cm^3$ of the 0.62 M solution of magnesium dibutyl used in step b) of preparation I. The mixture obtained was stirred, heated to 80°C, maintained at that temperature for one hour and then allowed to cool to ambient temperature.

c) Treatment with titanium tetrachloride

To the reaction mixture from IIb) were added 5.9 $cm^3$ of titanium tetrachloride. The mixture was stirred at ambient temperature for 30 minutes. The mixture was allowed to settle and the supernatant liquid was removed by decantation. The solid was washed six times by decantation using 1500 $cm^3$ of the isoparaffin fraction at ambient temperature for each wash. The solid was finally suspended in 1000 $cm^3$ of the isoparaffin fraction at ambient temperature. The solid reaction product present in the reaction mixture will hereafter be identified as TMC-II.

In the foregoing procedure in step IIa), 1 millimole of silicon tetrachloride was used for each gramme of alumina (which contained approximately 1 millimole of reactive sites per gramme), in step IIb), 0.5 millimole of magnesium dibutyl was used for each gramme of alumina, and in step IIc), 0.55 millimole of titanium tetrachloride was used for each gramme of alumina.

III Preparation of transition metal reaction product

The procedure described for preparation II was repeated with the exception that some of the conditions were varied and additional treatment steps were added.

In step a), 132.5 g of alumina were suspended in 1500 $cm^3$ of the isoparaffin fraction and 73 $cm^3$ of silicon tetrachloride were added. The mixture was heated at 80°C for three hours and was then allowed to cool to ambient temperature. The mixture was not separated.

After step a), and before effecting step b), to the reaction mixture from step a) were added 2.5 $cm^3$ of titanium tetrachloride. The mixture was stirred at ambient temperature for one hour, allowed to settle and the supernatant liquid removed by decantation. The solid was washed ten times by decantation using 1500 $cm^3$ of the isoparaffin fraction at ambient temperature for each

wash. The solid was finally resuspended in 1500 $cm^3$ of the isoparaffin fraction.

In step b) 107 $cm^3$ of the magnesium dibutyl solution was used and the mixture was stirred for one hour at ambient temperature.

In step c), 2.5 $cm^3$ of titanium tetrachloride were used, the mixture was stirred for one hour at ambient temperature and was not subsequently separated. The solid reaction product present in the reaction mixture, when used in a polymerisation process as described in Example 11, was found to give an active polymerisation catalyst system. A portion of the product of step c) was separated and subjected to a further treatment step.

To this separated portion, which contained 40 g of solid was added 1.32 $cm^3$ of titanium tetrachloride. The mixture was stirred at ambient temperature for one hour and then filtered. The solid was washed four times using 500 $cm^3$ of the isoparaffin fraction at ambient temperature for each wash. The solid was finally resuspended in 600 $cm^3$ of the isoparaffin fraction.

The solid reaction product obtained will hereafter be identified as TMC-III.

IV <u>Preparation of transition metal reaction product</u>

The procedure described for preparation II was repeated with the exception that some of the conditions were varied.

In step a), 74.6 g of alumina, 1200 $cm^3$ of the isoparaffin fraction and 4.1 $cm^3$ of silicon tetrachloride were used. The mixture was stirred at ambient temperature for 1.5 hours but was not heated to 80°C. The solid was washed three times using 1900 $cm^3$ of the isoparaffin fraction and finally resuspended in 1200 $cm^3$ of the isoparaffin fraction.

In step b), 120.3 $cm^3$ of the magnesium dibutyl solution were added. The mixture was stirred at ambient temperature for 1.25 hours, heated to 80°C and maintained at that temperature for one hour. The supernatant liquid was decanted off, the solid was washed three times by decantation using 1900 $cm^3$ of the isoparaffin fraction at ambient temperature for each wash and finally suspended in 1200 $cm^3$ of the isoparaffin fraction.

In step c), 4.1 $cm^3$ of titanium tetrachloride were added and stirring at ambient temperature was effected for 1.25 hours. The solid was washed twice using 1900 $cm^3$ of the isoparaffin fraction and finally suspended in 1500 $cm^3$ of the isoparaffin fraction.

The solid reaction product obtained will hereafter be identified as TMC-IV.

V <u>Preparation of transition metal reaction product</u>

To a portion of the suspension obtained in preparation IV was added titanium tetrachloride in an amount equivalent to 0.5 millimole of titanium tetrachloride for each gramme of solid. The mixture was stirred at ambient temperature for three hours, allowed to settle, the supernatant liquid removed by decantation and the solid washed three times by decantation using 1900 $cm^3$ of the isoparaffin fraction for each wash. The solid was finally suspended in the isoparaffin fraction to give a concentration of 1 gramme of solid for each 40 $cm^3$ of liquid.

The solid reaction product obtained will hereafter be identified as TMC-V.

VI <u>Preparation of transition metal reaction product</u>

The procedure described for preparation I was repeated with the exception that some of the conditions were varied.

In step a), 21.7 g of the silica dried as described in treatment B) were suspended in 150 $cm^3$ of the

isoparaffin fraction. The mixture was heated to 60°C and 0.72 $cm^3$ of silicon tetrachloride were added. The mixture was stirred at 60°C for 1 hour 15 minutes. The solid was washed three times using 75 $cm^3$ of the isoparaffin fraction at between 65°C and 85°C for each wash. The solid was then suspended in 150 $cm^3$ of the isoparaffin fraction and the mixture allowed to cool to 60°C.

In step b), 36.5 $cm^3$ of the magnesium dibutyl solution were added followed by 16 $cm^3$ of a 0.62 M magnesium dibutyl solution in a mixture of hexane and heptane. This mixture was stirred at 60°C for three hours, cooled to 25°C, filtered and the solid washed three times using 75 $cm^3$ of the isoparaffin fraction at ambient temperature for each wash. The solid was finaly suspended in 150 $cm^3$ of the isoparaffin fraction.

In step c), the mixture was heated to 70°C, 0.95 $cm^3$ of titanium tetrachloride was added and the mixture was stirred for 65 minutes. The mixture was filtered and the solid resuspended in 150 $cm^3$ of the isoparaffin fraction at ambient temperature.

The solid reaction product obtained will hereafter be identified as TMC-VI.

VII <u>Preparation of transition metal reaction product</u>

The procedure described for preparation II was repeated with the exception that some of the conditions were varied.

In step a), 82.0 g of alumina, 1000 $cm^3$ of the isoparaffin fraction and 200 $cm^3$ of a 0.62 M magnesium dibutyl solution in hexane was used (no silicon tetrachloride was added in this step). The mixture was stirred for three hours at ambient temperature. The solid was washed three times using 1900 $cm^3$ of the isoparaffin fraction for each wash and was suspended in 1300 $cm^3$ of the isoparaffin fraction, all at ambient temperature.

In step b), to the suspension from step a) were added 4.5 $cm^3$ of silicon tetrachloride (no magnesium dibutyl solution was used in this step). The mixture was stirred at ambient temperature for one hour, heated to 80°C and maintained at that temperature for one hour.

In step c), 4.5 $cm^3$ of titanium tetrachloride were added to the suspension at 80°C from step b). The mixture was stirred at 80°C for 30 minutes and allowed to cool to ambient temperature while continuing to stir. The product was not separated or washed.

The solid reaction product present in the reaction mixture will hereafter be identified as TMC-VII.

VIII <u>Preparation of transition metal reaction product</u>

About 650 $cm^3$ of the suspension obtained in preparation VII were transferred to a different reaction vessel, the liquid was filtered off and 550 $cm^3$ of titanium tetrachloride were added. The mixture was stirred, heated to 80°C and maintained at that temperature for 3.5 hours. The supernatant liquid was removed and the solid was washed three times at 80°C using 1900 $cm^3$ of the isoparaffin fraction for each wash, and then three times at ambient temperature using 1900 $cm^3$ of the isoparaffin fraction for each wash. The solid was finally suspended in 800 $cm^3$ of the isoparaffin fraction.

The solid reaction product obtained will hereafter be identified as TMC-VIII.

IX <u>Preparation of transition metal reaction product</u>

a) <u>Reaction with alumina and trichlorosilane</u>

50 g of the alumina dried as described in treatment A) were suspended in one litre of the isoparaffin fraction in a two-litre jacketted reaction vessel provided with a stirrer. 5.5 $cm^3$ of trichlorosilane were added to the suspension. The mixture was then stirred at ambient temperature (about 20°C) for two and a half hours. Stirring was stopped, the mixture was allowed to settle

and the supernatant liquid was removed by decantation. The solid was washed twice by decantation using 1800 $cm^3$ of the isoparaffin fraction at ambient temperature for each wash. After the second wash, most of the residual liquid was removed by forcing it through a glass tube at the lower end of which was located a sintered glass frit. The washed solid was suspended in one litre of the isoparaffin fraction at ambient temperature.

b) Treatment with magnesium dibutyl

To the mixture from step a) were added 40 $cm^3$ of the magnesium dibutyl solution used in step b) of preparation I. This mixture was stirred for 30 minutes at ambient temperature.

c) Treatment with titanium tetrachloride

To the reaction mixture from step b) were added 3.6 $cm^3$ of titanium tetrachloride. The mixture was stirred at ambient temperature for 30 minutes, allowed to stand without stirring for 16 hours and then stirred for a further one hour. The mixture was allowed to settle and the supernatant liquid was removed by decantation. The solid was washed twice using 1500 $cm^3$ of the isoparaffin fraction at ambient temperature for each wash. After the second wash, most of the residual liquid was removed by forcing it through a glass tube at the lower end of which was located a sintered glass frit. The washed solid was finally suspended in one litre of the isoparaffin fraction at ambient temperature. The product obtained will hereafter be identified as TMC-IX.

In the foregoing procedure in step a), one millimole of trichlorosilane was used for each gramme of alumina (which contained approximately one millimole of reactive sites per gramme), in step b), 0.5 millimole of magnesium dibutyl was used for each gramme of alumina, and in step c), 0.17 millimole of titanium tetrachloride was used for each gramme of alumina.

X Preparation of transition metal reaction product

a) Reaction with alumina and phosphorus trichloride

49.3 g of the alumina dried as described in treatment A) were suspended in 300 $cm^3$ of the isoparaffin fraction in a two-litre jacketted reaction vessel provided with a stirrer. 4.5 $cm^3$ of phosphorus trichloride were added to the suspension. The mixture was then stirred at ambient temperature (about 20°C) for four hours. The mixture was allowed to settle, the supernatant liquid was removed by decantation and the solid was washed four times by decantation using 1500 $cm^3$ of the isoparaffin fraction at ambient temperature for each wash. The washed solid was suspended in 1000 $cm^3$ of the isoparaffin fraction at ambient temperature.

b) Treatment with magnesium dibutyl

To the mixture from step a) were added 40 $cm^3$ of the magnesium dibutyl solution used in step b) of preparation I. The mixture obtained was stirred for 30 minutes at ambient temperature.

c) Treatment with titanium tetrachloride

To the reaction mixture from step b) were added 2.75 $cm^3$ of titanium tetrachloride. The mixture was stirred at ambient temperature for 30 minutes. The mixture was allowed to settle and the supernatant liquid was removed by decantation. The solid was washed four times using 1500 $cm^3$ of the isoparaffin fraction at ambient temperature for each wash. The solid was finally suspended in 1000 $cm^3$ of the isoparaffin fraction at ambient temperature. The solid reaction product obtained will hereafter be identified as TMC-X.

In the foregoing procedure in step a), one millimole of phosphorus trichloride was used for each gramme of alumina (which contained approximately one millimole of reactive sites per gramme), in step b) 0.5 millimole of magnesium dibutyl was used for each gramme of alumina, and

in step c), 0.5 millimole of titanium tetrachloride was used for each gramme of alumina.

XI Preparation of transition metal reaction product

a) Reaction with silica and magnesium dibutyl

146 g of the silica dried as described in treatment C) were suspended in $600cm^3$ of the isoparaffin fraction in a two-litre jacketted reaction vessel provided with a stirrer. 471 $cm^3$ of the solution of magnesium dibutyl used in step b) of preparation I were added to the suspension. The mixture was then stirred at ambient temperature (about 20°C) for four hours. Stirring was stopped, the mixture allowed to settle and the supernatant liquid was removed by decantation. The solid was washed six times by decantation using 1500 $cm^3$ of the isoparaffin fraction at ambient temperature for each wash.

b) Treatment with silicon tetrachloride

The washed solid from step a) was suspended in 729 $cm^3$ of silicon tetrachloride and a quantity of the isoparaffin fraction was added to give a total volume of the reaction mixture of 1500 $cm^3$. This mixture was stirred, heated to 80°C and maintained at that temperature for four hours. The mixture was then allowed to settle, the supernatant liquid was decanted off and the solid was washed nine times using 1500 $cm^3$ of the isoparaffin fraction at ambient temperature for each wash. After the final wash most of the liquid was removed by forcing it through a glass tube at the lower end of which was located a sintered glass frit.

c) Treatment with titanium tetrachloride

The washed solid from step b) was suspended in 1460 $cm^3$ of titanium tetrachloride . The mixture was stirred, heated to 80°C and maintained at that temperature for four hours. The mixture was allowed to settle, the supernatant liquid was decanted off and the solid was

washed by decantation six times using 1500 $cm^3$ of the isoparaffin fraction at 80°C for each wash and a further four times using 1500 $cm^3$ of the isoparaffin fraction at ambient temperature for each wash. The solid was finally suspended in the isoparaffin fraction at ambient temperature to give a total volume of 1500 $cm^3$. The solid reaction product obtained will hereafter be identified as TMC-XI.

In the foregoing procedure, an excess quantity of each of the reactants, relative to the silica, was used.

The products of preparations I to XI were used to effect the copolymerisation of ethylene with a 1-olefine monomer as described in the following Examples.

EXAMPLES 1 TO 10

Into a stirred stainless steel autoclave of 30 litres capacity were introduced, under hydrogen at a pressure of 4.2 kg/$cm^2$ gauge, 13 litres of a mixture of hexane and butene-1. The mixture also contained 40 millimoles of aluminium trioctyl and 50 ppm by weight of an antistatic agent of the formula $C_6F_{13}O(CH_2CH_2O)_8C_nH_{(2n+1)}$ where n has a value of from 16 to 18.

The contents of the reactor were stirred and heated up to 80°C. The reactor was vented to reduce the pressure. Ethylene was added to give a total pressure of 80 psi gauge (5.6 kg/$cm^2$ gauge). A titanium-containing component was then added in a quantity to attain, and subsequently to maintain, a monitored ethylene consumption of between 1.0 and 1.5 kg per hour. Ethylene was added at a rate sufficient to maintain the pressure of 80 psi gauge (5.6 kg/$cm^2$ gauge). During the reaction, unless otherwise indicated, a 0.1 M solution of aluminium trioctyl in hexane was added continuously at a rate of 40 millimoles per hour.

The polymerisation was terminated and the polymer product consequently recovered by transferring to a vessel of 200 litres capacity containing 50 litres of a 0.01 N aqueous solution of sodium hydroxide and then passing steam through the stirred mixture until all of the hexane had been evaporated. The aqueous polymer suspension was then filtered and the polymer was dried in a fluid bed drier using hot nitrogen as the fluidising gas.

Further details of the polymerisations, and the results obtained, are set out in Table I.

Table 1

| Ex No (a) | Ti Compound TMC Ref (b) | Ti Compound Amount (mM) (c) | % Wt butene-1 (d) | Initial Hydrogen Pressure ($kg/cm^2$) (e) | Polymer MFI (f) | Polymer Density ($kg/m^3$) (h) | Polymer Yield (kg) | Polyn Time (hrs) (i) | S.Ex. (j) |
|---|---|---|---|---|---|---|---|---|---|
| 1 | I | 1.5 | 8.04 | 2.67 | 1.37 | 923 | 1.36 | 1.15 | 1.58 |
| 2 | III | 4.8 | 7.33 | 2.53 | 1.07 | 923.6 | 0.96 | 1.30 | 1.55 |
| *3 | IV | 5.8 | 7.00 | 2.53 | 1.89 | 930.7 | 1.28 | 1.10 | 1.5 |
| 4 | V | 11.5 | 7.33 | 2.53 | 0.93 | 918.4 | 1.68 | 1.30 | 1.45 |
| *5 | VI | 0.9 | 7.00 | 2.53 | 0.81 | 934.7 | 1.01 | 1.00 | 1.48 |
| 6 | VII | 2.5 | 7.00 | 2.53 | 0.33 | 927.9 | 1.63 | 1.30 | 1.42 |
| *7 | VIII | 1.8 | 6.98 | 2.53 | 1.70 | 921.6 | 1.15 | 1.10 | 1.51 |
| 8 | IX | 2.7 | 7.33 | 2.53 | 0.56 | 927.2 | 1.44 | 1.10 | 1.53 |
| 9 | X | 4.8 | 7.33 | 2.53 | 1.38 | 929 | 1.55 | 2.00 | 1.55 |
| 10 | XI | 1.8 | 7.00 | 2.53 | 4.7 | 919.5 | 2.56 | 1.30 | 1.32 |

Notes to Table 1

(a) In the Examples marked *, 200 millimoles of aluminium trioctyl were present in the initial reaction mixture and no further aluminium trioctyl was added during the course of the polymerisation.

(b) As defined in Preparations I to XI.

(c) is given as total mM of titanium contained in the product of Preparations I to XI which was added to initiate and maintain the polymerisation.

(d) Expressed as

$$\frac{(\text{Wt butene-1}) \times 100}{\text{Wt initial mixture of butene-1 plus hexane}}$$

(e) This is the pressure to which the reactor was vented before adding the ethylene.

(f) MFI is melt flow index measured by ASTM Method D 1238-70 at 190°C using a 2.16 kg weight.

(h) Density was measured as described in ASTM 1928/70, Method A, using a density gradient column at 23°C.

(i) Figures after the decimal point equal minutes, that is 1.10 means 1 hr 10 minutes.

(j) S.Ex. is stress exponent and is given by the relationship.

$$\frac{\text{Log}_{10}\text{ MFI 5} - \text{Log}_{10}\text{ MFI 2.16}}{\text{Log}_{10}\text{ 5} - \text{Log}_{10}\text{ 2.16}}$$

where MFI 5 is the melt flow index measured as in (f) using a 5kg weight and MFI 2.16 is the melt flow index measured as in (f).

EXAMPLE 11

A 20 cm internal diameter fluidised bed reactor vessel, operated in a continuous manner, was used to produce an ethylene/butene-1 copolymer. A reaction mixture comprising ethylene, butene-1 and hydrogen was circulated continuously through the bed at a superficial velocity estimated to be about four times the

minimum necessary for fluidisation. In the fluidised bed, the reaction temperature was controlled at 80°C by adjusting the temperature of the gas fed to the fluidised bed reactor vessel using a heat exchanger in the circulating gas loop. Aluminium trioctyl was pumped continuously into the reactor as a 0.25 molar solution in n-hexane. The solid reaction product TMC II was blown into the reactor as a dry powder in a stream of process gas at frequent intervals so as to maintain a rate of polymer production of about 1.5 kg/hr, which corresponds to a mean residence time of four hours. The reaction pressure was maintained automatically by admitting an ethylene/hydrogen mixture through a control valve. Liquid butene-1 was pumped into the circulating gas stream so as to maintain a constant composition as determined by Gas Liquid Chromotography.

The polymer formed was removed periodically so as to maintain an essentially constant level in the reactor vessel. The polymer collected was degassed in a stream of nitrogen which had been passed over a bath of water at ambient temperature, and then through a steam jacket. The use of this warm, moist nitrogen removed monomers and also de-activated the catalyst and alkyl residues.

Further details, together with some characteristics of the polymers obtained, are set out in Table 2.

Table 2

| Ex No | TMC II Rate (mM/hr) (b) (c) | Alkyl Rate mM/hr | Gas Composition Mole % (k) | | | Rate of Polymer Production kg/hr (l) | Polymer MFI (f) | Polymer Density $kg/m^3$ (h) | Reaction Pressure ($kg/cm^2$ absolute) | S.Ex. (j) |
|---|---|---|---|---|---|---|---|---|---|---|
| | | | Eth | B-1 | Hy | | | | | |
| 11 | 0.08 | 25 | 55.2 | 26.3 | 18.5 | 1.28 | 2.91 | 921.2 | 8.44 | 1.35 |

Notes to Table 2

(b), (c), (f), (h) and (j) are all as defined in Notes to Table 1.

(k) Eth is ethylene

B-1 is butene-1

Hy is Hydrogen

(l) This is the rate at which polymer is removed from the reactor vessel in order to maintain an essentially constant level in the reactor vessel.

XII Preparation of transition metal reaction product

a) Reaction with silica and magnesium dibutyl

10.6 g of the silica dried as described in treatment C) were suspended in 100 $cm^3$ of a heptane fraction, essentially all of which had a boiling point in the range 99°C up to 102°C (hereafter referred to simply as the "heptane fraction") in a 200 $cm^3$ three necked glass flask provided with a glass frit and a stirrer. 45.1 $cm^3$ of a 0.705 M solution, in the isoparaffin fraction, of the magnesium dibutyl used in step b) of preparation I were added to the suspension. The mixture was stirred, heated to 70°C and maintained at that temperature for one hour. Stirring was stopped, the mixture was allowed to settle and the supernatant liquid was removed by filtration. The solid was washed 5 times by filtration using 100 $cm^3$ of the heptane fraction at ambient temperature for each wash. The damp solid was dried at ambient temperature at a pressure of 5 mm of mercury until it became a free flowing powder.

b) Reaction with titanium tetrachloride/carbon tetrachloride

The dried solid obtained in stage a) was transferred, in portions, through a flexible PVC tube into a similar 200 $cm^3$ three necked glass flask containing a stirred mixture of 72 $cm^3$ of titanium tetrachloride and 28 $cm^3$ of carbon tetrachloride at ambient temperature. The contents of the reaction vessel were then stirred for one hour at ambient temperature. The supernatant liquid was removed by filtration and the solid was washed 8 times by filtration using 100 $cm^3$ of the heptane fraction at ambient temperature for each wash. The solid was finally suspended in a total of 500 $cm^3$ of the heptane fraction.

The solid reaction product obtained will hereafter be identified as TMC-XII.

XIII Preparation of transition metal reaction product

a) Reaction with silica and magnesium dibutyl

The procedure of stage a) of preparation XII was repeated using 9.81 g of silica and 41.7 $cm^3$ of the magnesium dibutyl solution.

b) Reaction with titanium tetrachloride/carbon tetrachloride mixture

The procedure of stage b) of preparation XII was repeated using a mixture of 65 $cm^3$ of titanium tetrachloride and 35 $cm^3$ of carbon tetrachloride.

The solid reaction product obtained will hereafter be identified as TMC-XIII.

XIV Preparation of transition metal reaction product

a) Reaction with silica and magnesium dibutyl

The procedure of stage a) of preparation XII was repeated using 10 g of silica and 42.5 $cm^3$ of the magnesium dibutyl solution.

b) Reaction with titanium tetrachloride/carbon tetrachloride mixture

The procedure of stage b) of preparation XII was repeated with the exception that, after adding the solid to the liquid mixture, the contents of the reaction vessel were heated up to 80°C and maintained at that temperature for four hours. Subsequently, the solid was washed 8 times with the heptane fraction at 80°C.

The solid reaction product obtained will hereafter be identified as TMC-XIV.

XV and XVI Preparation of transition metal reaction products

a) Reaction with silica and boron trichloride

Into a 250 $cm^3$, three necked, round-bottom flask provided with a magnetic stirrer were placed 18.64 g of the silica dried as described in treatment C). To one neck of the flask were connected a cold finger containing an acetone/solid carbon dioxide mixture. The cold finger

was also connected to a container of boron trichloride. The whole system was evacuated to a residual pressure of about 0.1 mm of mercury. The boron trichloride vaporised, condensed on the cold finger and dripped into the flask containing the silica.

The contents of the round-bottom flask were agitated for three hours, using the magnetic stirrer and manual shaking. During this time the contents of the cold finger were removed and the cold finger was allowed to warm up to ambient temperature. The boron trichloride container was replaced by a bubbler containing BDH liquid paraffin. At the end of three hours, nitrogen was passed into the round bottomed flask to raise the pressure to atmospheric and the nitrogen was passed through the bubbler for five minutes in order to remove any unreacted boron trichloride from the silica.

XVb) Treatment with magnesium dibutyl

6.23 g of the solid reaction product from step a) were placed in a 200 $cm^3$ three necked glass flask provided with a glass frit and a stirrer. 50 $cm^3$ of the heptane fraction were added to the flask followed by 17.2 $cm^3$ of a 0.618 M solution of the magnesium dibutyl in the isoparaffin fraction. The mixture was stirrer for one hour at ambient temperature. The mixture was filtered, and washed five times using 100 $cm^3$ of the heptane fraction at ambient temperature for each wash.

XVc) Treatment with titanium tetrachloride

To the solid from step XVb) were added 100 $cm^3$ of titanium tetrachloride. The mixture was stirred, heated up to 80°C and maintained at that temperature for four hours. The mixture was filtered, washed 8 times using 100 $cm^3$ of the heptane fraction at 80°C for each wash and finally suspended in 100 $cm^3$ of the heptane fraction at ambient temperature. The mixture was transferred to a storage vessel and a further 150 $cm^3$ of the heptane fraction were added.

The solid reaction product obtained will hereafter be identified as TMC XV.

XVIb) Treatment with magnesium dibutyl

The procedure described in step XVb) was repeated using 6.81 g of the solid reaction product from step a) and 18.8 $cm^3$ of the magnesium dibutyl solution.

XVIc) Treatment with titanium tetrachloride

To the solid from step XVIb) were added 50 $cm^3$ of the heptane fraction and 0.64 $cm^3$ of titanium tetrachloride. The mixture was stirred for two hours at ambient temperature, filtered, the solid was washed once with 100 $cm^3$ of the heptane fraction at ambient temperature and suspended in 100 $cm^3$ of the heptane fraction at ambient temperature. The mixture was transferred to a storage vessel and a further 150 $cm^3$ of the heptane fraction were added.

The solid reaction product obtained will hereafter be identified as TMC XVI.

XVII Preparation of transition metal reaction product

a) Reaction with alumina and magnesium dibutyl

11.5 g of the alumina dried as described in treatment D) were placed in a 200 $cm^3$ three necked glass flask provided with a glass frit and stirrer. 50 $cm^3$ of the heptane fraction were added and the mixture was stirred. 55.8 $cm^3$ of an 0.618 M solution of the magnesium dibutyl were added and the mixture was stirred for one hour at ambient temperature. The mixture was filtered and the solid was washed five times using 100 $cm^3$ of the heptane fraction at ambient temperature for each wash.

b) Treatment of boron trichloride

7.5 $cm^3$ of liquid boron trichloride were evaporated on to the damp solid obtained in step a) using the procedure described in step a) of preparations XV and XVI. The mixture was allowed to stand for three hours. The solid was washed five times using 100 $cm^3$ of the heptane fraction at ambient temperature for each wash.

c) Treatment with titanium tetrachloride

The solid from step b) was suspended in 100 $cm^3$ of titanium tetrachloride, the mixture was stirred, heated to 80°C and maintained at that temperature for four hours. The mixture was filtered and the solid was washed 8 times using 100 $cm^3$ of the heptane fraction at ambient temperature for each wash. The solid was suspended in 100 $cm^3$ of the heptane fraction, transferred to a storage vessel and a further 150 $cm^3$ of the heptane fraction were added.

The solid reaction product obtained will hereafter be identified as TMC-XVII.

XVIII Preparation of transition metal reaction product

a) Reaction with alumina and magnesium dibutyl

The procedure of step a) of preparation XVII was repeated using 12.91 g of the alumina dried as described in treatment A), 50 $cm^3$ of the heptane fraction and 62.7 $cm^3$ of the magnesium dibutyl solution.

b) Treatment with boron trichloride

The damp solid from step a) was treated with 8.4 $cm^3$ of boron trichloride, the procedure otherwise being as described for step b) of preparation XVII.

c) Treatment with titanium tetrachloride

The solid from step b) was treated with titanium tetrachloride and washed using the procedure of step c) of preparation XVII.

The solid reaction product obtained will hereafter be identified as TMC-XVIII.

XIX Preparation of transition metal reaction product

a) Reaction with alumina and magnesium dibutyl

The procedure was as described for step a) of preparation XVIII with the exception that 10.72 g of alumina, 50 $cm^3$ of the heptane fraction and 52 cm of the magnesium dibutyl solution were used.

b) Treatment with boron trichloride

The damp solid from step a) was treated with 7.0 $cm^3$ of boron trichloride, the procedure otherwise being as described for step b) of preparation XVII.

c) Treatment with titanium tetrachloride

The solid from step b) was suspended in a solution of 0.6 $cm^3$ of titanium tetrachloride in 100 $cm^3$ of the heptane fraction. The mixture was stirred for two hours at ambient temperature, filtered and the solid was washed twice using 100 $cm^3$ of the heptane fraction at ambient temperature for each wash. The solid was suspended in 100 $cm^3$ of the heptane fraction, transferred to a storage vessel and a further 150 $cm^3$ of the heptane fraction were added.

The solid reaction product obtained will hereafter be identified as TMC-XIX.

XX Preparation of transition metal reaction product

a) Reaction with alumina and magnesium dibutyl

85.3 g of the alumina dried as described in treatment A) were suspended in 870 $cm^3$ of the isoparaffin fraction in a two litre jacketted reaction vessel provided with a stirrer. 132 $cm^3$ of a 0.646 M solution, in the isoparaffin fraction, of the magnesium dibutyl used in step b) of preparation I were added to the suspension. The mixture was stirred at ambient temperature for 30 minutes.

b) Treatment with titanium tetrachloride

To the stirred suspension from step a) were added 4.7 $cm^3$ of titanium tetrachloride over a period of four minutes. The mixture was stirred for one hour at ambient temperature. The mixture was allowed to settle and the supernatant liquid was removed by decantation to give a final total volume of 780 $cm^3$.

c) Treatment with silicon tetrachloride

To the stirred suspension from step b) were added 180 $cm^3$ of silicon tetrachloride. The mixture was stirred, heated to 80°C and maintained at that temperature for 3 hours. The mixture was allowed to settle and the supernatant liquid was removed by decantation. The solid was washed 9 times using one litre of the isoparaffin fraction at ambient temperature for each wash. The solid was finally suspended in 850 $cm^3$ of the isoparaffin fraction at ambient temperature.

The solid reaction product obtained will hereafter be identified as TMC-XX.

In the foregoing procedure in step XXa), one millimole of magnesium dibutyl was used for each gramme of alumina, in step XXb), 0.5 millimole of titanium tetrachloride was used for each gramme of alumina and in step XXc), an excess quantity of silicon tetrachloride, relative to the reactive sites on the alumina, was used.

EXAMPLES 12 TO 20

The products of preparations XII to XX were used to effect the copolymerisation of ethylene and butene-1 using the procedure described for Examples 1 to 10.

Further details of the polymerisations, and the results obtained, are set out in Table 3.

Table 3

| Example No. | TMC Ref (k) | Polymer MFI (f) | Polymer Density ($kg/m^3$) (h) | S.Ex. (j) | Activity (l) |
|---|---|---|---|---|---|
| 12 | XII | 5.9 | 925.3 | 1.43 | 201 |
| 13 | XIII | 5.5 | 925.3 | 1.36 | 201 |
| 14 | XIV | 6.23 | 922.0 | 1.35 | 87 |
| 15 | XV | 11.6 | 911.8 | 1.35 | 197 |
| 16 | XVI | 13.8 | <910 | 1.37 | 209 |
| 17 | XVII | 6.8 | 920.4 | 1.31 | 231 |
| 18 | XVIII | 5.3 | 927.8 | 1.35 | 460 |
| 19 | XIX | ND | ND | ND | 210 |
| 20 | XX | 3.3 | 922.6 | 1.39 | 30 |

Notes to Table 3

(f) (h) and (j) are all as defined in Notes to Table 1.
(k) As defined in Preparations XII to XX.
(l) Activity is the monitored weight of ethylene added during the polymerisation for each millimole of titanium at one $kg/cm^2$ ethylene pressure in a time of one hour.

CLAIMS

1. A process for the production of an ethylene polymer which process comprises contacting ethylene, or a mixture of ethylene and a monomer which is copolymerisable with ethylene, under polymerisation conditions with a catalyst system obtained by mixing together 1) an organic compound of a metal of Group IIA of the Periodic Table or of aluminium, or a complex of an organic compound of a metal of Group IA or Group IIA of the Periodic Table with an organic compound of aluminium; and 2) a titanium-containing composition, characterised in that the titanium-containing composition is a reaction product obtained by reacting together reagents consisting of a component I, a component II, a component III, and a component IV, wherein component I is at least one substantially inert solid particulate material having reactive sites, component II is an organic magnesium compound or a complex or mixture of an organic magnesium compound and an aluminium compound, component III is at least one halogen-containing compound selected from hydrogen halides, boron halides, halogens, inter-halogen compounds and halides of elements of Groups IVB, VB and VIB of the Periodic Table, and component IV is titanium tetrachloride.

2. A process as claimed in claim 1 characterised in that ethylene is copolymerised with propylene, butene-1, pentene-1, hexene-1 or 4-methylpentene-1.

3. A process as claimed in claim 1 or claim 2 characterised in that a mixture of ethylene and another monomer is contacted with the catalyst system, wherein, in the mixture, the molar ratio of ethylene to the other monomer is in the range from 15:1 to 1:1.

4. A process as claimed, in any one of claims 1 to 3 characterised in that polymerisation is effected in the gas phase.

5. A process as claimed in any one of claims 1 to 4 characterised in that component 1) of the catalyst system is an aluminium trialkyl.

6. A process as claimed in any one of claims 1 to 5 characterised in that component 2) of the catalyst system is a reaction product obtained by reacting together a component I which is an oxide of a metal, including silicon, of Groups I to IV of the Periodic Table; a component II which is a dihydrocarbyl magnesium compound; a component III which is a hydrogen halide, a silicon halide of the formula

$$R^3_dSiZ_{(4-d)},$$

a hydrocarbyl halide of the formula

$$R^5Z_e,$$

a phosphorus halide, a phosphorus oxyhalide, a boron halide, chlorine or bromine; and a component IV which is titanium tetrachloride, wherein

$R^3$ is a hydrogen atom or a hydrocarbon radical;

$R^5$ is the residue obtained by removing one or more hydrogen atoms from a hydrocarbon compound;

Z is a halogen atom other than fluorine;

d is 0 or an integer from 1 up to 3; and

e is an integer from 1 up to 10.

7. A process as claimed in any one of claims 1 to 6 characterised in that component 2) of the catalyst system has been obtained either a) by mixing together all of components I, II, III and IV in a single stage or b) by reacting components II, III and IV with component I in more than one stage subject to the proviso either i) that at least one further component which is component II and/or component IV is added after the addition of

component III or ii) the last stage is effected by reaction with component IV.

8. A process as claimed in any one of claims 1 to 7 characterised in that component 2) of the catalyst system is the reaction product obtained by adding components II, III and IV in turn to component I to give more than one stage and the process is effected without separating the reaction product from the reaction mixture of one stage before adding a further component to effect the next stage.

9. A process as claimed in any one of claims 1 to 7 characterised in that component 2) of the catalyst system is the reaction product obtained by adding components II, III and IV in sequence to component I to give more than one stage and, between at least two of the stages, the reaction product from one stage is separated and washed before being subjected to the next stage.

10. A process as claimed in any one of claims 1 to 7 and 9 characterised in that component 2) of the catalyst system is the reaction product obtained by reacting components II, III and IV with component I in more than one stage, using an excess of at least one of components II, III or IV, and separating and washing the reaction product at the end of any stage in which an excess is used.

PDGJ80220900/VS

A $CH_2=CHR^1$

B $R^2_a MgX_{(2-a)}$

C $R^2_a MgX_{(2-a)} bR^2_c AlX_{(3-c)}$

D $R^2_a MgX_{(2-a)} + bR^2_c AlX_{(3-c)}$

E $R^3_d SiZ_{(4-d)}$

F $R^4 COZ$

G $R^5 Z_e$